# EUROPEAN PATENT APPLICATION

(11) **EP 4 654 626 A1**
(43) Date of publication of application: **26.11.2025**
(21) Application number: 23916785.1
(22) Date of filing: 19.01.2023
(51) Int. Cl.: H04W 4/06, H04W 76/10, H04W 76/40, H04W 68/00

(54) **OPERATION EXECUTION METHOD AND APPARATUS, OPERATION INSTRUCTION METHOD AND APPARATUS, COMMUNICATION APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Hersina, Günter
(86) International application number: PCT/CN2023/073172
(87) International publication number: WO 2024/152305

(57) **Abstract**

The present disclosure relates to the technical field of communications, and specifically relates to an operation execution method and apparatus, an operation instruction method and apparatus, a communication apparatus, and a storage medium. The operation execution method comprises: receiving a paging message, wherein the paging message includes multicast broadcast service information; and executing a first operation, wherein the first operation comprises at least one of the following: receiving a multicast broadcast service control channel (MCCH) message, triggering establishment of a radio resource control (RRC) connection, and ignoring the paging message. In the present disclosure, after receiving a paging message carrying multicast broadcast service information, a terminal can select one or more first operations from among three first operations and execute same, such that operations which are executed by the terminal after the terminal receives the paging message are regulated, helping in avoiding disorder of the execution of operations executed by the terminal after the terminal receives the paging message.

## Description

### TECHNICAL FIELD

The present disclosure relates to the field of communication technology, and specifically to a method for performing an operation, a method for indicating an operation, an apparatus for performing an operation, an apparatus for indicating an operation, a system for performing an operation, a communication device, and a computer-readable storage medium.

### BACKGROUND

A terminal may receive a multicast service in a connected state. When there is no data for the multicast service, a network device may switch the terminal to a non-connected state. However, the terminal receives the multicast service only in the connected state, which can imposes a significant limitation to a communication scenario.

### SUMMARY

Embodiments of the present disclosure provide a method for performing an operation, a method for indicating an operation, an apparatus for performing an operation, an apparatus for indicating an operation, a system for performing an operation, a communication device, and a computer-readable storage medium, so as to solve technical problems in the related art.

According to a first aspect of the embodiments of the present disclosure, a method for performing an operation is provided, performed by a terminal, including: receiving a paging message, in which the paging message includes multicast broadcast service (MBS) information; and performing a first operation, in which the first operation includes at least one of: receiving a MBS control channel (MCCH) message; triggering an establishment of a radio resource control (RRC) connection; or ignoring the paging message.

According to a second aspect of the embodiments of the present disclosure, a method for indicating an operation is provided, performed by a network device, including: sending a paging message to a terminal when the terminal has joined a multicast service session and is in a non-connected state, in which the paging message includes MBS information; and sending indication information to the terminal, in which the indication information indicates the terminal to perform a first operation after receiving the paging message, in which the first operation includes at least one of: receiving an MCCH message; triggering an establishment of an RRC connection; or ignoring the paging message.

According to a third aspect of the embodiments of the present disclosure, an apparatus for performing an operation is provided, including: a receiving module, configured to receive a paging message, in which the paging message includes MBS information; and a processing module, configured to perform a first operation, in which the first operation includes at least one of: receiving a MCCH message; triggering an establishment of an RRC connection; or ignoring the paging message.

According to a fourth aspect of the embodiments of the present disclosure, an apparatus for indicating an operation is provided, including: a sending module, configured to send a paging message to a terminal when the terminal has joined a multicast service session and is in a non-connected state, in which the paging message includes MBS information; and send indication information to the terminal, in which the indication information indicates the terminal to perform a first operation after receiving the paging message, in which the first operation includes at least one of: receiving a MCCH message; triggering an establishment of an RRC connection; or ignoring the paging message.

According to a fifth aspect of the embodiments of the present disclosure, a system for performing an operation is provided, including a terminal and a network device, in which the terminal is configured to implement the above method for performing an operation, and the network device is configured to implement the above method for indicating an operation.

According to a sixth aspect of the embodiments of the present disclosure, a communication device is provided, including: a processor; and a memory for storing a computer program, in which when the computer program is executed by the processor, the above method for performing an operation is implemented.

According to a seventh aspect of the embodiments of the present disclosure, a communication device is provided, including: a processor; and a memory for storing a computer program, in which when the computer program is executed by the processor, the above method for indicating an operation is implemented.

According to an eighth aspect of the embodiments of the present disclosure, a computer-readable storage medium for storing a computer program is provided. When the computer program is executed by a processor, the above method for performing an operation is implemented.

According to a ninth aspect of the embodiments of the present disclosure, a computer-readable storage medium for storing a computer program is provided. When the computer program is executed by a processor, the above method for indicating an operation is implemented.

According to the embodiments of the present disclosure, after receiving the paging message carrying the MBS information, the terminal may select one or more of the three first operations to be performed, which standardizes which operation the terminal performs after receiving the paging message, and is beneficial to avoiding the terminal performing operations in error after receiving the paging message.

### BRIEF DESCRIPTION OF THE DRAWINGS

**In** order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings may be obtained according to these drawings without creative labor.
FIG. 1 is a schematic flowchart of a method for performing an operation according to an embodiment of the present disclosure.
FIG. 2 is a schematic flowchart of another method for performing an operation according to an embodiment of the present disclosure.
FIG. 3 is a schematic flowchart of a further method for performing an operation according to an embodiment of the present disclosure.
FIG. 4 is a schematic flowchart of a further method for performing an operation according to an embodiment of the present disclosure.
FIG. 5 is a schematic flowchart of a further method for performing an operation according to an embodiment of the present disclosure.
FIG. 6 is a schematic flowchart of a method for indicating an operation according to an embodiment of the present disclosure.
FIG. 7 is a schematic flowchart of another method for indicating an operation according to an embodiment of the present disclosure.
FIG. 8 is a schematic flowchart of a further method for indicating an operation according to an embodiment of the present disclosure.
FIG. 9 is a schematic diagram of an interaction between a terminal and a network device according to an embodiment of the present disclosure.
FIG. 10 is a schematic block diagram of an apparatus for performing an operation according to an embodiment of the present disclosure.
FIG. 11 is a schematic block diagram of an apparatus for indicating an operation according to an embodiment of the present disclosure.
FIG. 12 is a schematic block diagram of an apparatus for indicating an operation according to an embodiment of the present disclosure.
FIG. 13 is a schematic block diagram of an apparatus for performing an operation according to an embodiment of the present disclosure.

### DETAILED DESCRIPTION

In order to enable those skilled in the art to understand the technical solutions of the present disclosure, technical solutions in embodiments of the present disclosure will be clearly and completely described below with reference to the accompanying drawings in embodiments of the present disclosure. Obviously, the embodiments described here are only part of the embodiments of the present disclosure and are not all embodiments of the present disclosure. Based on the embodiments of the present disclosure, other embodiments obtained by those skilled in the art without creative labor are within the scope of the present disclosure.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" used here may be interpreted as "when", "while", or "in response to determining... ".

For a purpose of brevity and ease of understanding, terms "greater than" or "less than", and "higher than" or "lower than" are used in the present disclosure to represent a size relationship. However, for those skilled in the art, it may be understood that the term "greater than" also covers a meaning of "greater than or equal to" and the term "less than" also covers a meaning of "less than or equal to"; and the term "higher than" covers a meaning of "higher than or equal to", and the term "lower than" also covers a meaning of "lower than or equal to".

In an embodiment, the terminal may receive a multicast service in a connected state or may receive a multicast service in a non-connected state. It needs to be noted that receiving the multicast service as described in the embodiments of the present disclosure includes receiving data for the multicast service.

In an embodiment, the non-connected state includes at least one of: an idle state or an inactive state.

For a scenario where the terminal may receive the multicast service only in the connected state, when the terminal is in the non-connected state, if a multicast service session is activated or a network device needs to send data to the terminal, the network device may send a paging message. After receiving the paging message, the terminal may enter the connected state to receive the multicast service.

However, for the terminal that may receive the multicast service in the non-connected state, it is not clear what operation is performed after receiving the paging message. This may cause the terminal to perform operations in error after receiving the paging message.

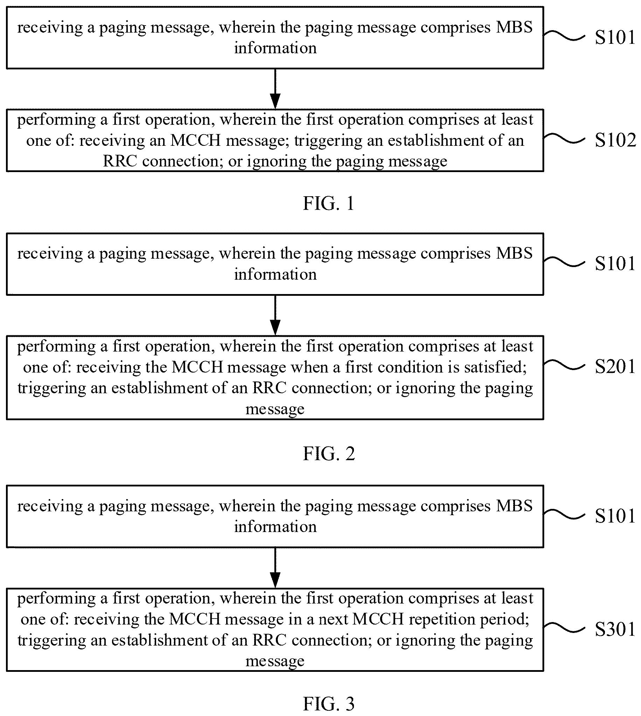

FIG. 1 is a schematic flowchart of a method for performing an operation according to an embodiment of the present disclosure. The method for performing an operation in this embodiment may be performed by a terminal, which includes but is not limited to a communication device, such as a mobile phone, a tablet, a wearable device, a sensor, and an Internet of Things device. The terminal may communicate with the network device, which includes but is not limited to a network device in 4G, 5G, 6G, and other communication systems, such as a base station and a core network.

As shown in FIG. 1, the method for performing an operation may include S101 and S102.

At S101, a paging message is received, in which the paging message includes multicast broadcast service (MBS) information.

At S102, a first operation is performed, in which the first operation includes at least one of:
receiving an MBS control channel (MCCH) message;
triggering an establishment of a radio resource control (RRC) connection; or
ignoring the paging message.

In an embodiment, the MBS may only include a multicast service, or only include a broadcast service, or include both the multicast service and the broadcast service.

In an embodiment, the MCCH message is configured to carry multicast service configuration, or broadcast service configuration, or the broadcast service and the multicast service configuration.

In an embodiment, an MCCH may include a broadcast service control channel, or a newly defined multicast service control channel. The newly defined multicast service control channel may transmit the multicast service configuration.

In an embodiment, the paging message may be a traditional paging message, or a group paging message.

In an embodiment, the terminal may join a multicast service session to receive the multicast service, and the network device may indicate the terminal to enter a non-connected state via an RRC signaling.

For example, if the RRC signaling indicates that the terminal enters into an inactive state, the RRC signaling may be an RRC Release signaling that carries suspendConfig.

In an embodiment, if the multicast service session is activated, or the network device needs to send the multicast service data to the terminal, the network device may send the paging message, and the paging message may carry the MBS information. It needs to be noted that functions of the paging message include, but are not limited to, indicating the terminal that a multicast service session is activated, that the network device needs to send multicast service data to the terminal. Other functions may be set up as needed, such as indicating the terminal to update an existing configuration, and indicating the terminal to release the existing configuration, in which the existing configuration includes an existing multicast service configuration.

The MBS information includes MBS identity information, such as a temporary mobile group identity (TMGI).

**In** an embodiment, the terminal, after receiving the paging message, may perform the first operation upon determining that the paging message carries the MBS information, and the MBS is an MBS that the terminal is interested in or is receiving.

**In** an embodiment, the terminal performing the first operation includes the terminal receiving the MCCH message broadcast by the network device, in which the MCCH message carries the multicast service configuration. The terminal may receive the multicast service according to the multicast service configuration.

**In** an embodiment, the terminal performing the first operation includes the terminal triggering the establishment of the RRC connection. The terminal may enter the connected state to receive at least one of: the multicast service, the multicast service configuration, and configuration information of an MCCH carrying the multicast configuration.

**In** an embodiment, the terminal performing the first operation includes the terminal ignoring the received paging message. Then the terminal may continue to receive the multicast service in the non-connected state.

It needs to be noted that above examples respectively illustrate the performing of the three first operation by means of several embodiments, but the manner of performing the first operation is not limited to the above several embodiments. The terminal may select one of first operations to be performed among the three first operations based on the above embodiments, or the terminal may select more than one operation to be performed among the three first operations.

For example, the terminal performing the first operation includes the terminal ignoring the received paging message and the terminal receiving the MCCH message broadcast by the network device. For example, the terminal performing the first operation includes the terminal triggering the establishment of the RRC connection and the terminal receiving the MCCH message broadcast by the network device. That is, the terminal may select one or more of the above three first operations to be performed.

According to the embodiments of the present disclosure, after receiving the paging message carrying the MBS information, the terminal may select one or more of the above three first operations to be performed, which standardizes which operation the terminal performs after receiving the paging message, and is beneficial to preventing the terminal from performing operations incorrectly after receiving the paging message.

In an embodiment, the terminal is a terminal that supports receiving the multicast service in the non-connected state.

A terminal that supports receiving the multicast service in the non-connected state may select one or more of the above three first operations to be performed after receiving the paging message. However, a terminal that does not support receiving the multicast service in the non-connected state, such as a terminal that only supports receiving the multicast service in the connected state, may only perform one operation after receiving the paging message that is, triggering the establishment of the RRC connection.

In an embodiment, the one or more first operations selected by the terminal to be performed may be determined by the terminal according to a protocol or according to indication information of the network device.

The indication information of the network device may be fixed or variable. For example, if the indication information of the network device is variable, the indication information may first indicate the terminal to ignore the received paging message when the paging message is received, and may subsequently change to indicate the terminal to receive the MCCH message when the paging message is received.

FIG. 2 is a schematic flowchart of another method for performing an operation according to an embodiment of the present disclosure. The method for performing an operation may be performed by a terminal. As shown in FIG. 2, receiving the MCCH message includes S201.

At S201, the MCCH message is obtained when a first condition is satisfied, in which the first condition includes at least one of:
the terminal is not configured with an available multicast service configuration;
the terminal is configured with available MCCH configuration information; or
receiving first indication information sent by a network device, in which the first indication information indicates the terminal to receive the MCCH message.

It needs to be noted that the embodiment shown in FIG. 2 may be implemented independently or in combination with at least one other embodiment in the present disclosure. A choice may be made based on a specific need, which is not limited in the present disclosure.

In an embodiment, the first condition may be indicated by the network device or determined according to the protocol.

In an embodiment, after receiving the paging message, the terminal may determine whether the first condition is satisfied, and only receive the MCCH message if the first condition is satisfied, and may not have to receive the MCCH message if the first condition is not satisfied.

In an embodiment, the multicast service configuration is carried in the MCCH, that is, the MCCH message includes the multicast service configuration. After obtaining the multicast service configuration from the MCCH message, the terminal may receive the multicast service based on the multicast service configuration.

In an embodiment, after receiving the paging message, the terminal may determine whether the terminal is configured with an available multicast service configuration.

The terminal is configured with the available multicast service configuration means that the terminal is configured with the multicast service configuration and the multicast service configuration has not expired. If the terminal is not configured with the multicast service configuration or if the terminal is configured with the multicast service configuration but the multicast service configuration has expired, it may be determined that the terminal is not configured with the available multicast service configuration.

For example, the multicast service configuration may be associated with verification information, such as a valid area and a valid time. If the terminal does not satisfy the verification information, it may be determined that the multicast service configuration is expired. Taking the valid area as an example, if a location of the terminal is outside the valid area, it may be determined that the multicast service configuration is expired.

If the terminal is not configured with the available multicast service configuration, the terminal may receive the MCCH message so as to obtain the multicast service configuration from the MCCH message and ensure that the multicast service may be successfully obtained based on the multicast service configuration obtained.

If the terminal is configured with the available MCCH configuration information, then it is not necessary to obtain the multicast service configuration from the MCCH message, and therefore it is not necessary to receive the MCCH message.

In an embodiment, after receiving the paging message, the terminal may determine whether the terminal is configured with the available MCCH configuration information.

The terminal is configured with the available MCCH configuration information means that the terminal is configured with the MCCH configuration information and the MCCH configuration information has not expired. If the terminal is not configured with the MCCH configuration information or if the terminal is configured with the MCCH configuration information but the MCCH configuration information has expired, it may be determined that the terminal is not configured with the available MCCH configuration information.

For example, the MCCH configuration information may be associated with verification information, such as a valid area and a valid time. If the terminal does not satisfy the verification information, it may be determined that the MCCH configuration information is expired. Taking the valid area as an example, if a location of the terminal is outside the valid area, it may be determined that the MCCH configuration information is expired.

If the terminal is configured with the available MCCH configuration information, the terminal may receive the MCCH message based on the MCCH configuration information and then obtain the multicast service configuration from the MCCH message so as to ensure successful reception of the multicast service based on the multicast service configuration obtained.

If the terminal is not configured with the available MCCH configuration information, the MCCH message may not be received based on the MCCH configuration information. In this case, the terminal may first obtain the MCCH configuration information and then receive the MCCH message based on the MCCH configuration information. For example, if the MCCH configuration information is sent via system information, the terminal may obtain the MCCH configuration information from the system information and then receive the MCCH message based on the MCCH configuration information. For example, if the MCCH configuration information is sent via a dedicated signaling, the terminal may trigger the establishment of the RRC connection, receive the dedicated signaling, obtain the MCCH configuration information from the dedicated signaling, and then receive the MCCH message based on the MCCH configuration information.

In an embodiment, after receiving the paging message, the terminal may determine whether to receive the MCCH message based on the first indication information received. For example, if the first indication information occupies 1 bit, and if the first indication information indicates the terminal to receive the MCCH message, for example a value of 1 bit is 1, the terminal may receive the MCCH message. If the first indication information indicates the terminal not to receive the MCCH message, for example a value of 1 bit is 0, the terminal does not have to receive the MCCH message.

In an embodiment, after receiving the paging message, the terminal may determine whether the first indication information is received. For example, if the first indication information is received, the terminal does not have to receive the MCCH message; if the first indication information is not received, the terminal receives the MCCH message by default.

It needs to be noted that the first indication information may be carried in the paging message, for example, in a paging cause of the paging message.

It needs to be noted that above several embodiments respectively illustrate that the MCCH message is received if a single first condition of the above three first conditions is satisfied. The present disclosure may also include embodiments in which the MCCH message is received if more than one of the above three first conditions are satisfied. That is, the terminal may receive the MCCH message if one of the above three conditions is satisfied, or may receive the MCCH message if more than one of the above three conditions are satisfied.

For example, after receiving the paging message, the terminal may determine whether the terminal is configured with the available multicast service configuration and whether the terminal is configured with the available MCCH configuration information.

If the terminal is not configured with the available multicast service configuration, and is configured with the available MCCH configuration information, the terminal may receive the MCCH message based on the MCCH configuration information, and then obtain the multicast service configuration from the MCCH message so as to ensure that the multicast service may be successfully received according to the multicast service configuration obtained.

If the terminal is configured with the available multicast service configuration, or if the terminal is not configured with the available MCCH configuration information, it does not necessary to receive the MCCH message.

A situation included in above embodiments is that the terminal may receive the MCCH message if the terminal is not configured with the available multicast service configuration. However, receiving the MCCH message in the present disclosure is not limited to receiving the MCCH message if the terminal is not configured with the available multicast service configuration, but also includes receiving the MCCH message if the terminal is configured with the available multicast service configuration.

For example, after receiving the paging message including the MBS information, the terminal may receive the MCCH message if the terminal is not configured with the available multicast service configuration, and then obtain the multicast service configuration from the MCCH message. After receiving the MCCH message including the MBS information, the terminal may receive the MCCH message if terminal is configured with the available multicast service configuration, and then obtain the multicast service configuration from the MCCH messages, and update the existing multicast service configuration based on the multicast service configuration obtained.

FIG. 3 is a schematic flowchart of another method for performing an operation according to an embodiment of the present disclosure. The method for performing an operation may be performed by a terminal. As shown in FIG. 3, receiving the MCCH message includes S301.

At S301, the MCCH message is received in a next MCCH repetition period.

It needs to be noted that the embodiment shown in FIG. 3 may be implemented independently or in combination with at least one other embodiment in the present disclosure. A choice may be made based on a specific need, which is not limited in the present disclosure.

**In** an embodiment, an operation of receiving the MCCH message by the terminal may be performed in the next MCCH repetition period.

For example, the network device may periodically broadcast the MCCH, and the configuration information of the MCCH may include a MCCH repetition period. The terminal may determine a current MCCH repetition period based on the configuration information of the MCCH.

Since in the current MCCH repetition period, the network device may have already broadcast a portion of the MCCH message, the terminal may not be able to obtain a complete multicast service configuration if it receives the MCCH message during the current MCCH repetition period.

Therefore, the terminal may determine a next MCCH repetition period of the current MCCH repetition period based on the MCCH configuration information, and then receive the MCCH message in the next MCCH repetition period, which is conducive to ensuring that the terminal can obtain the complete multicast service configuration.

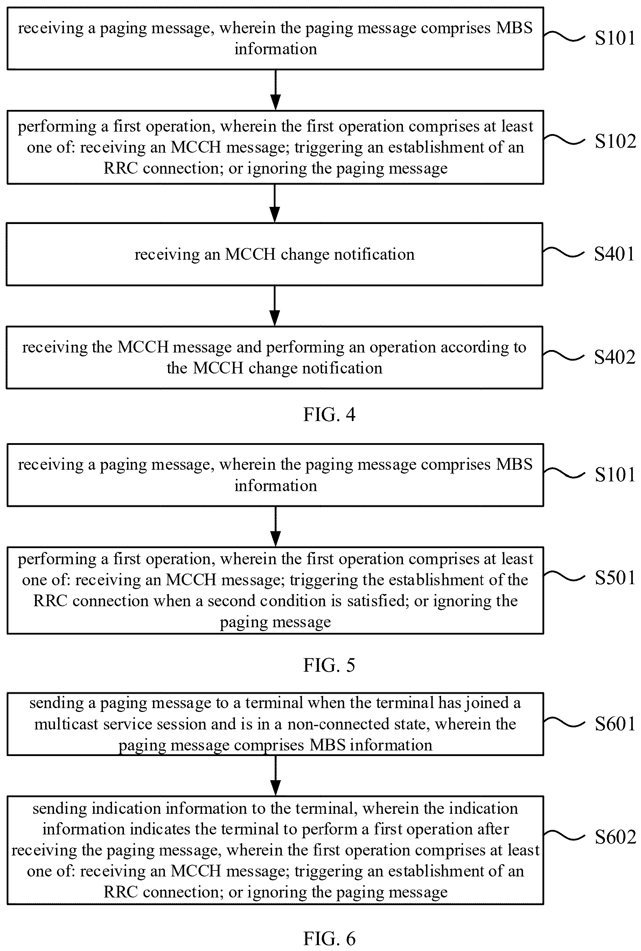

FIG. 4 is a schematic flowchart of another method for performing an operation according to an embodiment of the present disclosure. The method for performing an operation may be performed by a terminal. As shown in FIG. 4, the method for performing an operation further includes S401 and S402.

At S401, a MCCH change notification is received.

At S402, an operation is performed according to the MCCH change notification.

It needs to be noted that the embodiment shown in FIG. 4 may be implemented independently or in combination with at least one other embodiment in the present disclosure. A choice may be made based on a specific need, which is not limited in the present disclosure.

In an embodiment, the network device may send the MCCH change notification to the terminal.

For example, if the network device needs to change the multicast service configuration in the MCCH, the network device may send the MCCH change notification to the terminal. The terminal may determine that the multicast service configuration in the MCCH needs to be changed according to the MCCH change notification. In a case of a change in the multicast service configuration, the multicast service configuration stored in the terminal will be expire, so the terminal needs to re-obtain the multicast service configuration from the MCCH message, so the terminal can receive the MCCH message so that it can re-obtain the multicast service configuration from the MCCH message to store it, ensuring that the stored multicast service configuration is available.

In an embodiment, if the terminal receives the MCCH change notification after performing the first operation, it may receive the MCCH message according to the MCCH change notification.

For example, after receiving a first MCCH message, the terminal may receive the MCCH change notification, and then receive a second MCCH message according to the MCCH change notification, and update the first MCCH message based on the second MCCH message. For example, the first MCCH message includes a first multicast service configuration, and the second MCCH message includes a second multicast service configuration. The first multicast service configuration may be updated according to the second multicast service configuration.

For example, after triggering the establishment of the RRC connection, the terminal may receive the MCCH change notification, and then receive the MCCH message according to the MCCH change notification. For example, after triggering the establishment of the RRC connection and entering the connected state, the terminal may receive the multicast service based on the first multicast service configuration, and the MCCH message received according to the MCCH change notification contains the second multicast service configuration. The terminal may update the first multicast service configuration based on the second multicast service configuration, and thus receive the multicast service in the connected state based on updated multicast service configuration.

For example, after ignoring the paging message, the terminal may receive the MCCH change notification, and then perform a subsequent operation according to the MCCH change notification. For example, a terminal in the inactive state receives the paging message, which includes the MBS information, the terminal ignores the paging message. If the terminal receives the MCCH change notification later, the terminal may perform a subsequent operation according to the MCCH change notification. The operation performed according to the MCCH change notification include at least one of: receiving the MCCH message, terminal state transition, multicast service session activation, multicast service session deactivation, or multicast service configuration release.

In an embodiment, receiving the MCCH message includes: receiving the MCCH message starting from a time-domain unit receiving the MCCH change notification. The time-domain unit includes at least one of: a frame, a subframe, a time slot, or an orthogonal frequency division multiplexing (OFDM) symbol.

In an embodiment, performing the operation according to the MCCH change notification includes: obtaining the MCCH message starting from a time-domain unit receiving the MCCH change notification.

The network device may send a changed MCCH starting from the time-domain unit sending the MCCH change notification. The terminal receives the MCCH change notification sent by the network device and may determine that the MCCH message has changed, for example, it may determine that the multicast service configuration has changed. In a case of a change in the multicast service configuration, the multicast service configuration stored in the terminal expires. Therefore, the terminal needs to re-obtain the multicast service configuration from the MCCH message. Thus, the terminal may start receiving the MCCH message from the time-domain unit receiving the MCCH change notification, and then obtain the changed multicast service configuration from the received MCCH to ensure that the multicast service configuration in the terminal is available.

FIG. 5 is a schematic flowchart of another method for performing an operation according to an embodiment of the present disclosure. The method for performing an operation may be performed by a terminal. As shown in FIG. 5, triggering the establishment of the RRC connection includes S501.

At S501, the establishment of the RRC connection is triggered when a second condition is satisfied, in which the second condition includes at least one of:
the terminal is not configured with an available multicast service configuration;
the terminal is not configured with available MCCH configuration information; or
receiving second indication information sent by a network device, in which the second indication information indicates the terminal to establish the RRC connection.

**It** needs to be noted that the embodiment shown in FIG. 5 may be implemented independently or in combination with at least one other embodiment in the present disclosure, as may be chosen as desired, and the present disclosure does not limit thereon.

In an embodiment, the second condition may be indicated by the network device or determined according to the protocol.

In an embodiment, after receiving the paging message, the terminal may determine whether the second condition is satisfied, and only trigger the establishment of the RRC connection if the second condition is satisfied, and may not have to trigger the establishment of the RRC connection if the second condition is not satisfied.

**In** an embodiment, the multicast service configuration is carried in a dedicated signaling. In this case, the terminal needs to trigger the establishment of the RRC connection and enter the connected state before it can receive the dedicated signaling sent by the network device, and thus can obtain the multicast service configuration from the dedicated signaling.

In an embodiment, after receiving the paging message, the terminal may determine whether the terminal is configured with the available multicast service configuration.

The terminal is configured with the available multicast service configuration means that the terminal is configured with the multicast service configuration and the multicast service configuration has not expired. If the terminal is not configured with the multicast service configuration or if the terminal is configured with the multicast service configuration but the multicast service configuration has expired, it may be determined that the terminal is not configured with the available multicast service configuration.

For example, the multicast service configuration may be associated with verification information, such as a valid area and a valid time. If the terminal does not satisfy the verification information, it may be determined that the multicast service configuration is expired. Taking the valid area as an example, if a location of the terminal is outside the valid area, it may be determined that the multicast service configuration is expired.

If the terminal is not configured with the available multicast service configuration, the terminal may trigger the establishment of the RRC connection in order to obtain the multicast service configuration from the dedicated signaling after entering the connected state to ensure that the multicast service can be successfully received based on the obtained multicast service configuration.

If the terminal is configured with the available MCCH configuration information, then it is not necessary to obtain the multicast service configuration from the dedicated signaling, and therefore it is not necessary to trigger the establishment of the RRC connection. For example, the terminal may continue to receive the multicast service based on the available multicast service configuration in the non-connected state.

In an embodiment, the multicast service configuration may not only be carried in the dedicated signaling, but the multicast service configuration may also be carried in the MCCH. That is, the MCCH message includes the multicast service configuration, and the terminal, after obtaining the multicast service configuration from the MCCH message, may receive the multicast service according to the multicast service configuration.

In an embodiment, after receiving the paging message, the terminal may determine whether the terminal is configured with the available MCCH configuration information.

The terminal is configured with the available MCCH configuration information means that the terminal is configured with the MCCH configuration information and the MCCH configuration information has not expired. If the terminal is not configured with the MCCH configuration information or if the terminal is configured with the MCCH configuration information but the MCCH configuration information has expired, it may be determined that the terminal is not configured with the available MCCH configuration information.

For example, the MCCH configuration information may be associated with verification information, such as a valid area and a valid time. If the terminal does not satisfy the verification information, it may be determined that the MCCH configuration information is expired. Taking the valid area as an example, if a location of the terminal is outside the valid area, it may be determined that the MCCH configuration information is expired.

If the terminal is configured with the available MCCH configuration information, the terminal may receive the MCCH message based on the MCCH configuration information and then obtain the multicast service configuration from the MCCH message so as to ensure successful reception of the multicast service based on the multicast service configuration obtained. It can be seen that in this case, the terminal may receive the MCCH and obtain the multicast service configuration from the MCCH message. Therefore, it is not necessary to obtain the multicast service configuration from the dedicated signaling, and therefore it is not necessary to trigger the establishment of the RRC connection.

If the terminal is not configured with the available MCCH configuration information, the terminal cannot receive the MCCH message based on the MCCH configuration information. It can be seen that in this case, the terminal cannot receive the MCCH and cannot obtain the multicast service configuration from the MCCH message, so it is possible to trigger the establishment of the RRC connection and thus obtain the multicast service configuration from the dedicated signaling.

In an embodiment, after receiving the paging message, the terminal may determine whether to trigger the establishment of the RRC connection based on the received second indication information. For example, if the second indication information occupies 1 bit, and if the second indication information indicates the terminal to trigger the establishment of the RRC connection, for example a value of 1 bit is 1, the terminal may trigger the establishment of the RRC connection. If the second indication information indicates the terminal not to trigger the establishment of the RRC connection, for example a value of 1 bit is 0, the terminal does not have to trigger the establishment of the RRC connection.

In an embodiment, after receiving the paging message, the terminal may determine whether the second indication information is received. For example, if the second indication information is received, the terminal does not have to trigger the establishment of the RRC connection; if the second indication information is not received, the terminal triggers the establishment of the RRC connection by default.

The second indication information may be carried in the paging message, for example, in a paging cause of the paging message.

It needs to be noted that above several embodiments respectively illustrate that the establishment of the RRC connection is triggered if a single second condition of the above three second conditions is satisfied. The present disclosure may also include embodiments in which the establishment of the RRC connection is triggered if more than one of second conditions among the above three second conditions are satisfied. That is, the terminal may trigger the establishment of the RRC connection if one of the above three conditions is satisfied, or may trigger the establishment of the RRC connection if more than one of the above three conditions are satisfied.

For example, after receiving the paging message, the terminal may determine whether the terminal is configured with the available multicast service configuration and whether the terminal is configured with the available MCCH configuration information.

If the terminal is not configured with the available multicast service configuration, and the terminal is not configured with the available MCCH configuration information, the terminal may trigger the establishment of the RRC connection in order to receive the dedicated signaling in the connected state, and obtain the multicast service configuration from the dedicated signaling so as to ensure that the multicast service may be successfully received according to the obtained multicast service configuration.

If the terminal is configured with the available multicast service configuration, or if the terminal is configured with the available MCCH configuration information, it is not necessary to trigger the establishment of the RRC connection.

A situation included in above embodiments is that the terminal may trigger the establishment of the RRC connection if the terminal is not configured with the available multicast service configuration. However, triggering the establishment of the RRC connection in the present disclosure is not only limited to triggering the establishment of an RRC connection if the terminal is configured with the available multicast service configuration, but also includes triggering the establishment of an RRC connection if the terminal is configured with available multicast service configuration.

**For** example, after receiving the paging message including the MBS information, if the terminal is not configured with the available multicast service configuration, the terminal may trigger the establishment of the RRC connection, receive the dedicated signaling after entering the connected state, and then obtain the multicast service configuration from the dedicated signaling. After receiving the paging message including the MBS information, if the terminal is configured with the available multicast service configuration, the terminal may also trigger the establishment of the RRC connection, receive the dedicated signaling after entering the connected state, obtain the multicast service configuration from the dedicated signaling, and then update the existing multicast service configuration based on the obtained multicast service configuration.

In an embodiment, ignoring the paging message includes: ignoring the paging message when a third condition is satisfied, in which the third condition includes one of:
the terminal is configured with an available multicast service configuration; or
the terminal is not configured with available multicast service configuration, in which the multicast service configuration is carried by the MCCH.

In an embodiment, the third condition may be indicated by the network device or determined according to the protocol.

In an embodiment, after receiving the paging message, the terminal may determine whether the third condition is satisfied, and only ignore the paging message if the third condition is satisfied, and may not ignore the paging message if the third condition is not satisfied, but establishes the RRC connection based on the paging message and enters the connected state.

In an embodiment, after receiving the paging message, the terminal may determine whether the terminal is configured with the available multicast service configuration.

The terminal is configured with the available multicast service configuration means that the terminal is configured with the multicast service configuration and the multicast service configuration has not expired. If the terminal is not configured with the multicast service configuration or if the terminal is configured with the multicast service configuration but the multicast service configuration has expired, it may be determined that the terminal is not configured with the available multicast service configuration.

For example, the multicast service configuration may be associated with verification information, such as a valid area and a valid time. If the terminal does not satisfy the verification information, it may be determined that the multicast service configuration is expired. Taking the valid area as an example, if a location of the terminal is outside the valid area, it may be determined that the multicast service configuration is expired.

If the terminal is not configured with the available multicast service configuration, the terminal may not ignore the paging message, but trigger the establishment of the RRC connection based on the paging message, enter the connected state, and then receive the multicast service configuration configured by the network device in the connected state, so as to ensure that the multicast service may be successfully received based on the obtained multicast service configuration.

If the terminal is configured with the available multicast service configuration, the terminal may ignore the paging message so that it does not have to trigger the establishment of the RRC connection based on the paging message, and continue to remain in the non-connected state and still receive the multicast service configuration according to the available multicast service configuration.

**In** an embodiment, after receiving the paging message, the terminal may determine whether the terminal is configured with the available multicast service configuration.

If the terminal is not configured with the available multicast service configuration, and the multicast service configuration is carried by the dedicated signaling, instead of ignoring the paging message, the terminal may trigger the establishment of the RRC connection based on the paging message, enter the connected state, receive the dedicated signaling in the connected state, and obtain the multicast service configuration from the dedicated signaling so as to ensure that the multicast service may be successfully received based on the obtained multicast service configuration.

If the terminal is configured with the available multicast service configuration, and the multicast service configuration is carried by the MCCH, the terminal may ignore the paging message so that it does not have to trigger the establishment of the RRC connection based on the paging message, continue to remain to receive the MCCH message in the non-connected state, and can obtain the multicast service configuration from the MCCH message so that it can receive the multicast service configuration based on the obtained multicast service configuration.

FIG. 6 is a schematic flowchart of a method for indicating an operation according to an embodiment of the present disclosure. The method for indicating an operation in the embodiment may be performed by a network device, which may communicate with the terminal. The network device includes but is not limited to a base station in 4G, 5G, 6G, and other communication systems, and the terminal includes but is not limited to a communication device, such as a mobile phone, a tablet, a wearable device, a sensor, and an Internet of Things device.

As shown in FIG. 6, the method for indicating an operation may include S601 and S602.

**At** S601, a paging message is sent to a terminal when the terminal has joined a multicast service session and is in a non-connected state, in which the paging message includes MBS information.

At S602, indication information is sent to the terminal, in which the indication information indicates the terminal to perform a first operation after receiving the paging message, in which the first operation includes at least one of:
receiving an MCCH message;
triggering an establishment of an RRC connection; or
ignoring the paging message.

It needs to be noted that an execution sequence of S601 and S602 may be adjusted as needed. For example, S601 may be executed before S602, or S602 may be executed before S601, or S601 and S602 may be executed simultaneously, for instance, the indication information may be carried in the multicast service configuration.

In an embodiment, the MBS may include only a multicast service, or include only a broadcast service, or include both the multicast service and the broadcast service.

In an embodiment, the MCCH message is configured to carry multicast service configuration, or broadcast service configuration, or the broadcast service and the multicast service configuration.

In an embodiment, the MCCH may include a broadcast service control channel, or a newly defined multicast service control channel. The newly defined multicast service control channel may transmit the multicast service configuration.

In an embodiment, the paging message may be a traditional paging message, or a group paging message.

In an embodiment, the terminal may join a multicast service session to receive the multicast service, and the network device may indicate the terminal to enter a non-connected state via an RRC signaling.

For example, if the RRC signaling indicates that the terminal enters the inactive state, the RRC signaling may be an RRCRelease signaling that carries suspendConfig.

In an embodiment, if the multicast service session is activated, or the network device needs to send the multicast service data to the terminal, the network device may send the paging message, and the paging message may carry the MBS information. It needs to be noted that functions of the paging message include, but are not limited to, indicating the terminal that a multicast service session is activated, that the network device needs to send the multicast service data to the terminal. Other functions may be set up as needed, such as indicating the terminal to update an existing configuration, and indicating the terminal to release the existing configuration, in which the existing configuration includes an existing multicast service configuration.

The MBS information includes MBS identity information, such as a TMGI.

In an embodiment, the terminal, after receiving the paging message, determines that the paging message carries the MBS information, the MBS is an MBS that the terminal is interested in or is currently receiving, and the terminal may perform the first operation based on the indication information sent by the network device.

In an embodiment, the first operation that the network device indicates the terminal to perform via the indication information includes the terminal receiving the MCCH message broadcast by the network device. The MCCH message carries multicast service configuration, and the terminal may receive the multicast service according to the multicast service configuration.

In an embodiment, the first operation that the network device indicates the terminal to perform via the indication information includes the terminal triggering the establishment of the RRC connection. The terminal may enter the connected state to receive at least one of: the multicast service, the multicast service configuration, and configuration information of an MCCH carrying the multicast configuration.

In an embodiment, the first operation that the network device indicates the terminal to perform via the indication information includes the terminal ignoring the paging message received. Then the terminal may continue to receive the multicast service in the non-connected state.

It needs to be noted that above examples respectively illustrate the performing of the three first operation by means of several embodiments, but the manner of performing the first operation is not limited to the above several embodiments. The terminal may select one of first operations to be performed among the three first operations based on the above embodiments, or the terminal may select more than one operation to be performed among the three first operations.

For example, the first operation that the network device indicates the terminal to perform via the indication information includes the terminal ignoring the received paging message and the terminal receiving the MCCH message broadcast by the network device. For example, the terminal performing the first operation includes the terminal triggering the establishment of the RRC connection and the terminal receiving the MCCH message broadcast by the network device. That is, the terminal may select one or more of the above three first operations to be performed.

According to the embodiments of the present disclosure, the network device may send the paging message carrying the MBS information to the terminal, and may also send the indication information to the terminal indicating the terminal to select one or more of the above three first operations to be performed, which standardizes which operation that the terminal should perform after receiving the paging message, and is beneficial to preventing the terminal from performing operations incorrectly after receiving the paging message.

In an embodiment, the terminal is a terminal that supports receiving the multicast service in the non-connected state.

A terminal that supports receiving the multicast service in the non-connected state may select one or more of the above three first operations to be performed after receiving the paging message. However, a terminal that does not support receiving the multicast service in the non-connected state, such as a terminal that only supports receiving the multicast service in the connected state, may only perform one operation after receiving the paging message that is, triggering the establishment of the RRC connection.

In an embodiment, the one or more of the first operations selected by the terminal to be performed is determined based on the indication information of the network device in the above embodiments, or based on the protocol.

The indication information sent by the network device may be fixed or variable. For example, if the indication information sent by the network device is variable, the indication information may first indicate the terminal to ignore the received paging message when the paging message is received, and subsequently change to indicate the terminal to receive the MCCH message when the paging message is received.

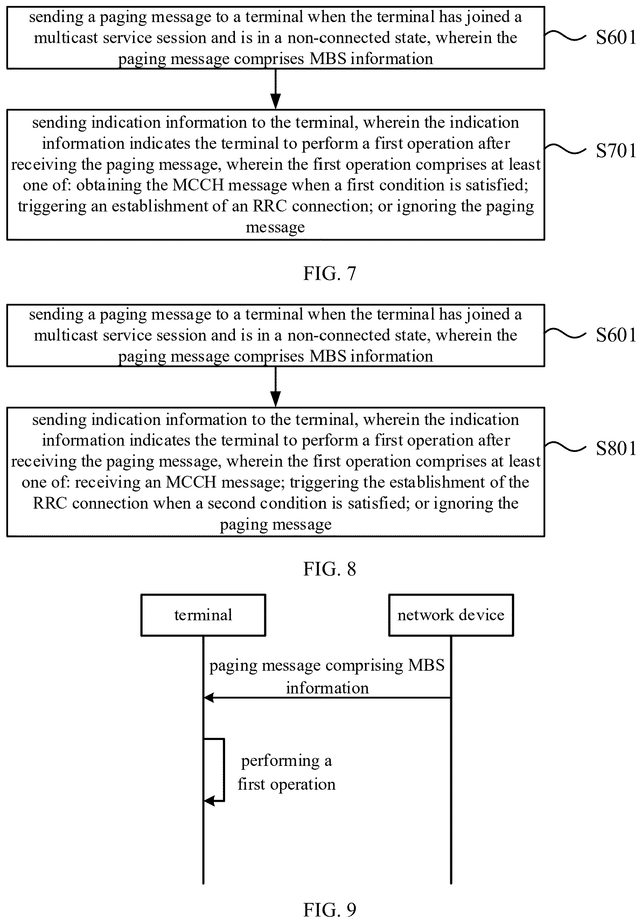

FIG. 7 is a schematic flowchart of another method for indicating an operation according to an embodiment of the present disclosure. The method for indicating an operation may be performed by a network device. As shown in FIG. 7, receiving the MCCH message includes S701.

At S701, the MCCH message is obtained when a first condition is satisfied, in which the first condition includes at least one of:
the terminal is not configured with an available multicast service configuration;
the terminal is configured with available MCCH configuration information; or
receiving first indication information sent by a network device, in which the first indication information indicates the terminal to receive the MCCH message.

It needs to be noted that the embodiment shown in FIG. 7 may be implemented independently or in combination with at least one other embodiment in the present disclosure. A choice may be made based on a specific need, which is not limited in the present disclosure.

In an embodiment, the first condition may be indicated by the network device or determined according to the protocol.

In an embodiment, after receiving the paging message, the terminal may determine whether the first condition is satisfied, and only receive the MCCH message if the first condition is satisfied and may not have to receive the MCCH message if the first condition is not satisfied.

In an embodiment, the multicast service configuration is carried in the MCCH, that is, the MCCH message includes the multicast service configuration. After obtaining the multicast service configuration from the MCCH message, the terminal may receive the multicast service based on the multicast service configuration.

In an embodiment, after receiving the paging message, the terminal may determine whether the terminal is configured with an available multicast service configuration.

The terminal is configured with the available multicast service configuration configured means that the terminal is configured with the multicast service configuration and the multicast service configuration has not expired. If the terminal is not configured with the multicast service configuration or if the terminal is configured with the multicast service configuration but the multicast service configuration has expired, it may be determined that the terminal is not configured with the available multicast service configuration.

For example, the multicast service configuration may be associated with verification information, such as a valid area and a valid time. If the terminal does not satisfy the verification information, it may be determined that the multicast service configuration is expired. Taking the valid area as an example, if a location of the terminal is outside the valid area, it may be determined that the multicast service configuration is expired.

If the terminal is not configured with the available multicast service configuration, the terminal may receive the MCCH message so as to obtain the multicast service configuration from the MCCH message and ensure that the multicast service may be successfully obtained based on the multicast service configuration obtained.

If the terminal is configured with the available MCCH configuration information, then it is not necessary to obtain the multicast service configuration from the MCCH message, and therefore it is not necessary to receive the MCCH message.

In an embodiment, after receiving the paging message, the terminal may determine whether the terminal is configured with the available MCCH configuration information.

The terminal is configured with the available MCCH configuration information means that the terminal is configured with the MCCH configuration information and the MCCH configuration information has not expired. If the terminal is not configured with the MCCH configuration information or if the terminal is configured with the MCCH configuration information but the MCCH configuration information has expired, it may be determined that the terminal is not configured with the available MCCH configuration information.

For example, the MCCH configuration information may be associated with verification information, such as a valid area and a valid time. If the terminal does not satisfy the verification information, it may be determined that the MCCH configuration information is expired. Taking the valid area as an example, if a location of the terminal is outside the valid area, it may be determined that the MCCH configuration information is expired.

If the terminal is configured with the available MCCH configuration information, the terminal may receive the MCCH message based on the MCCH configuration information and then obtain the multicast service configuration from the MCCH message so as to ensure successful reception of the multicast service based on the multicast service configuration obtained.

If the terminal is not configured with the available MCCH configuration information, the MCCH message may not be received based on the MCCH configuration information. In this case, the terminal may first obtain the MCCH configuration information and then receive the MCCH message based on the MCCH configuration information. For example, if the MCCH configuration information is sent via system information, the terminal may obtain the MCCH configuration information from the system information and then receive the MCCH message based on the MCCH configuration information. For example, if the MCCH configuration information is sent via a dedicated signaling, the terminal may trigger the establishment of the RRC connection, receive the dedicated signaling, obtain the MCCH configuration information from the dedicated signaling, and then receive the MCCH message based on the MCCH configuration information.

In an embodiment, after receiving the paging message, the terminal may determine whether to receive the MCCH message based on the first indication information received. For example, if the first indication information occupies 1 bit, and if the first indication information indicates the terminal to receive the MCCH message, for example a value of 1 bit is 1, the terminal may receive the MCCH message. If the first indication information indicates the terminal not to receive the MCCH message, for example a value of 1 bit is 0, the terminal does not have to receive the MCCH message.

In an embodiment, after receiving the paging message, the terminal may determine whether the first indication information is received. For example, if the first indication information is received, the terminal does not have to receive the MCCH message; if the first indication information is not received, the terminal receives the MCCH message by default.

The first indication information may be carried in the paging message, for example, in a paging cause of the paging message.

It needs to be noted that above several embodiments respectively illustrate that the MCCH message is received if a single first condition of the above three first conditions is satisfied. The present disclosure may also include an embodiments in which the MCCH message is received if more than one of the above three first conditions are satisfied. That is, the terminal may receive the MCCH message if one of the above three conditions is satisfied, or may receive the MCCH message if more than one of the above three conditions are satisfied.

For example, after receiving the paging message, the terminal may determine whether the terminal is configured with the available multicast service configuration and whether the terminal is configured with the available MCCH configuration information.

If the terminal is not configured with the available multicast service configuration, and is configured with the available MCCH configuration information, the terminal may receive the MCCH message based on the MCCH configuration information, and then obtain the multicast service configuration from the MCCH message so as to ensure that the multicast service may be successfully received according to the multicast service configuration obtained.

If the terminal is configured with the available multicast service configuration, or if the terminal is not configured with the available MCCH configuration information is not configured in the terminal, it does not necessary to receive the MCCH message.

**A** situation included in above embodiments is that the terminal may receive the MCCH message if the terminal is not configured with the available multicast service configuration. However, receiving the MCCH message in the present disclosure is not limited to receiving the MCCH message if the terminal is not configured with the available multicast service configuration, but also includes receiving the MCCH message if the terminal is configured with the available multicast service configuration.

For example, after receiving the paging message including the MBS information, the terminal may receive the MCCH message if the terminal is not configured with the available multicast service configuration, and then obtain the multicast service configuration from the MCCH message. After receiving the MCCH message including the MBS information, the terminal may receive the MCCH message if terminal is configured with the available multicast service configuration, and then obtain the multicast service configuration from the MCCH messages, and update the existing multicast service configuration based on the multicast service configuration obtained.

In an embodiment, an operation of the terminal receiving the MCCH message may be performed in the next MCCH repetition period.

For example, the network device may periodically broadcast the MCCH, and the configuration information of the MCCH may include an MCCH repetition period. The terminal may determine a current MCCH repetition period based on the configuration information of the MCCH.

Since in the current MCCH repetition period, the network device may have already broadcast a portion of the MCCH message, the terminal may not be able to obtain a complete multicast service configuration if it receives the MCCH message during the current MCCH repetition period.

Therefore, the terminal may determine a next MCCH repetition period of the current MCCH repetition period based on the MCCH configuration information, and then receive the MCCH message in the next MCCH repetition period, which is conducive to ensuring that the terminal can obtain the complete multicast service configuration.

In an embodiment, the method for indicating an operation further includes: sending a MCCH change notification to the terminal, in which the terminal performs the operation according to the MCCH change notification.

In an embodiment, the network device may send the MCCH change notification to the terminal.

For example, if the network device needs to change the multicast service configuration in the MCCH, the network device may send the MCCH change notification to the terminal. The terminal may determine that the multicast service configuration in the MCCH needs to be changed according to the MCCH change notification. In a case of a change in the multicast service configuration, the multicast service configuration stored in the terminal will be expire, so the terminal needs to re-obtain the multicast service configuration from the MCCH message, so the terminal can receive the MCCH message so that it can re-obtain the multicast service configuration from the MCCH message to store it, ensuring that the stored multicast service configuration is available.

**In** an embodiment, if the terminal receives the MCCH change notification after performing the first operation, it may receive the MCCH message according to the MCCH change notification.

For example, after receiving a first MCCH message, the terminal may receive the MCCH change notification, and then receive a second MCCH message according to the MCCH change notification, and update the first MCCH message based on the second MCCH message. For example, the first MCCH message includes a first multicast service configuration, and the second MCCH message includes a second multicast service configuration. The first multicast service configuration may be updated according to the second multicast service configuration.

For example, after triggering the establishment of the RRC connection, the terminal may receive the MCCH change notification, and then receive the MCCH message according to the MCCH change notification. For example, after triggering the establishment of the RRC connection and entering the connected state, the terminal may receive the multicast service based on the first multicast service configuration, and the MCCH message received according to the MCCH change notification contains the second multicast service configuration. The terminal may update the first multicast service configuration based on the second multicast service configuration, and thus receive the multicast service in the connected state based on updated multicast service configuration.

For example, after ignoring the paging message, the terminal may receive the MCCH change notification, and then perform a subsequent operation according to the MCCH change notification. For example, a terminal in the inactive state receives the paging message, which includes the MBS information, the terminal ignores the paging message. If the terminal receives the MCCH change notification later, the terminal may perform a subsequent operation according to the MCCH change notification. The operation performed according to the MCCH change notification include at least one of: receiving the MCCH message, terminal state transition, multicast service session activation, multicast service session deactivation, or multicast service configuration release.

In an embodiment, receiving the MCCH message includes: receiving the MCCH message starting from a time-domain unit receiving the MCCH change notification. The time-domain unit includes at least one of: a frame, a subframe, a time slot, or an orthogonal frequency division multiplexing (OFDM) symbol.

In an embodiment, the terminal may obtain the MCCH message starting from the time-domain unit receiving the MCCH change notification.

The network device may send a changed MCCH starting from the time-domain unit sending the MCCH change notification. The terminal receives the MCCH change notification sent by the network device and may determine that the MCCH message has changed, for example, it may determine that the multicast service configuration has changed. In a case of a change in the multicast service configuration, the multicast service configuration stored in the terminal expires. Therefore, the terminal needs to re-obtain the multicast service configuration from the MCCH message. Thus, the terminal may start receiving the MCCH message from the time-domain unit receiving the MCCH change notification, and then obtain the changed multicast service configuration from the received MCCH to ensure that the multicast service configuration in the terminal is available.

FIG. 8 is a schematic flowchart of a further method for indicating an operation according to an embodiment of the present disclosure. The method for indicating an operation may be performed by a network device. As shown in FIG. 8, triggering the establishment of the RRC connection includes S801.

At S801, triggering the establishment of the RRC connection when a second condition is satisfied, in which the second condition includes at least one of:
the terminal is not configured with an available multicast service configuration;
the terminal is not configured with available MCCH configuration information; or
receiving second indication information sent by a network device, in which the second indication information indicates the terminal to establish the RRC connection.

It needs to be noted that the embodiment shown in FIG. 8 may be implemented independently or in combination with at least one other embodiment in the present disclosure, as may be chosen as desired, and the present disclosure does not limit thereon.

In an embodiment, the second condition may be indicated by the network device or determined according to the protocol.

In an embodiment, after receiving the paging message, the terminal may determine whether the second condition is satisfied, and only trigger the establishment of the RRC connection if the second condition is satisfied, and may not have to trigger the establishment of the RRC connection if the second condition is not satisfied.

In an embodiment, the multicast service configuration is carried in a dedicated signaling. In this case, the terminal needs to trigger the establishment of the RRC connection and enter the connected state before it can receive the dedicated signaling sent by the network device, and thus can obtain the multicast service configuration from the dedicated signaling.

In an embodiment, after receiving the paging message, the terminal may determine whether the terminal is configured with the available multicast service configuration.

The terminal is configured with the available multicast service configuration means that the terminal is configured with the multicast service configuration and the multicast service configuration has not expired. If the terminal is not configured with the multicast service configuration or if the terminal is configured with the multicast service configuration but the multicast service configuration has expired, it may be determined that the terminal is not configured with the available multicast service configuration.

For example, the multicast service configuration may be associated with verification information, such as a valid area and a valid time. If the terminal does not satisfy the verification information, it may be determined that the multicast service configuration is expired. Taking the valid area as an example, if a location of the terminal is outside the valid area, it may be determined that the multicast service configuration is expired.

If the terminal is not configured with the available multicast service configuration, the terminal may trigger the establishment of the RRC connection in order to obtain the multicast service configuration from the dedicated signaling after entering the connected state to ensure that the multicast service can be successfully received based on the obtained multicast service configuration.

If the terminal is configured with the available MCCH configuration information, then it is not necessary to obtain the multicast service configuration from the dedicated signaling, and therefore it is not necessary to trigger the establishment of the RRC connection. For example, the terminal may continue to receive the multicast service based on the available multicast service configuration in the non-connected state.

In an embodiment, the multicast service configuration may not only be carried in the dedicated signaling, but the multicast service configuration may also be carried in the MCCH. That is, the MCCH message includes the multicast service configuration, and the terminal, after obtaining the multicast service configuration from the MCCH message, may receive the multicast service according to the multicast service configuration.

In an embodiment, after receiving the paging message, the terminal may determine whether the terminal is configured with the available MCCH configuration information.

The terminal is configured with the available MCCH configuration information means that the terminal is configured with the MCCH configuration information and the MCCH configuration information has not expired. If the terminal is not configured with the MCCH configuration information or if the terminal is configured with the MCCH configuration information but the MCCH configuration information has expired, it may be determined that the terminal is not configured with the available MCCH configuration information.

For example, the MCCH configuration information may be associated with verification information, such as a valid area and a valid time. If the terminal does not satisfy the verification information, it may be determined that the MCCH configuration information is expired. Taking the valid area as an example, if a location of the terminal is outside the valid area, it may be determined that the MCCH configuration information is expired.

If the terminal is configured with the available MCCH configuration information, the terminal may receive the MCCH message based on the MCCH configuration information and then obtain the multicast service configuration from the MCCH message so as to ensure successful reception of the multicast service based on the multicast service configuration obtained. It can be seen that in this case, the terminal may receive the MCCH and obtain the multicast service configuration from the MCCH message. Therefore, it is not necessary to obtain the multicast service configuration from the dedicated signaling, and therefore it is not necessary to trigger the establishment of the RRC connection.

If the terminal is not configured with the available MCCH configuration information, the terminal cannot receive the MCCH message based on the MCCH configuration information. It can be seen that in this case, the terminal cannot receive the MCCH and cannot obtain the multicast service configuration from the MCCH message, so it is possible to trigger the establishment of the RRC connection and thus obtain the multicast service configuration from the dedicated signaling.

In an embodiment, after receiving the paging message, the terminal may determine whether to trigger the establishment of the RRC connection based on the received second indication information. For example, if the second indication information occupies 1 bit, and if the second indication information indicates the terminal to trigger the establishment of the RRC connection, for example a value of 1 bit is 1, the terminal may trigger the establishment of the RRC connection. If the second indication information indicates the terminal not to trigger the establishment of the RRC connection, for example a value of 1 bit is 0, the terminal does not have to trigger the establishment of the RRC connection.

In an embodiment, after receiving the paging message, the terminal may determine whether the second indication information is received. For example, if the second indication information is received, the terminal does not have to trigger the establishment of the RRC connection; if the second indication information is not received, the terminal triggers the establishment of the RRC connection by default.

The second indication information may be carried in the paging message, for example, in a paging cause of the paging message.

It needs to be noted that above several embodiments respectively illustrate that the establishment of the RRC connection is triggered if a single second condition of the above three second conditions is satisfied. The present disclosure may also include embodiments in which the establishment of the RRC connection is triggered if more than one of second conditions among the above three second conditions are satisfied. That is, the terminal may trigger the establishment of the RRC connection if one of the above three conditions is satisfied, or may trigger the establishment of the RRC connection if more than one of the above three conditions are satisfied.

For example, after receiving the paging message, the terminal may determine whether the terminal is configured with the available multicast service configuration and whether the terminal is configured with the available MCCH configuration information.

If the terminal is not configured with the available multicast service configuration, and the terminal is not configured with the available MCCH configuration information, the terminal may trigger the establishment of the RRC connection in order to receive the dedicated signaling in the connected state, and obtain the multicast service configuration from the dedicated signaling so as to ensure that the multicast service may be successfully received according to the obtained multicast service configuration.

If the terminal is configured with the available multicast service configuration, or if the terminal is configured with the available MCCH configuration information, it is not necessary to trigger the establishment of the RRC connection.

A situation included in above embodiments is that the terminal may trigger the establishment of the RRC connection if the terminal is not configured with the available multicast service configuration. However, triggering the establishment of the RRC connection in the present disclosure is not only limited to triggering the establishment of an RRC connection if the terminal is configured with the available multicast service configuration, but also includes triggering the establishment of an RRC connection if the terminal is configured with available multicast service configuration

**For** example, after receiving the paging message including the MBS information, if the terminal is not configured with the available multicast service configuration, the terminal may trigger the establishment of the RRC connection, receive the dedicated signaling after entering the connected state, and then obtain the multicast service configuration from the dedicated signaling. After receiving the paging message including the MBS information, if the terminal is configured with the available multicast service configuration, the terminal may also trigger the establishment of the RRC connection, receive the dedicated signaling after entering the connected state, obtain the multicast service configuration from the dedicated signaling, and then update the existing multicast service configuration based on the obtained multicast service configuration.

In an embodiment, ignoring the paging message includes: ignoring the paging message when a third condition is satisfied, in which the third condition includes one of:
the terminal is configured with an configuring available multicast service configuration; or
the terminal is not configured with available multicast service configuration, in which the multicast service configuration is carried by the MCCH.

In an embodiment, the third condition may be indicated by the network device or determined according to the protocol.

In an embodiment, after receiving the paging message, the terminal may determine whether the third condition is satisfied, and only ignore the paging message if the third condition is satisfied, and may not ignore the paging message if the third condition is not satisfied, but establishes the RRC connection based on the paging message and enters the connected state.

In an embodiment, after receiving the paging message, the terminal may determine whether the terminal is configured with the available multicast service configuration.

The terminal is configured with the available multicast service configuration means that the terminal is configured with the multicast service configuration and the multicast service configuration has not expired. If the terminal is not configured with the multicast service configuration or if the terminal is configured with the multicast service configuration but the multicast service configuration has expired, it may be determined that the terminal is not configured with the available multicast service configuration.

For example, the multicast service configuration may be associated with verification information, such as a valid area and a valid time. If the terminal does not satisfy the verification information, it may be determined that the multicast service configuration is expired. Taking the valid area as an example, if a location of the terminal is outside the valid area, it may be determined that the multicast service configuration is expired.

If the terminal is not configured with the available multicast service configuration, the terminal may not ignore the paging message, but trigger the establishment of the RRC connection based on the paging message, enter the connected state, and then receive the multicast service configuration configured by the network device in the connected state, so as to ensure that the multicast service may be successfully received based on the obtained multicast service configuration.

If the terminal is configured with the available multicast service configuration, the terminal may ignore the paging message so that it does not have to trigger the establishment of the RRC connection based on the paging message, and continue to remain in the non-connected state and still receive the multicast service configuration according to the available multicast service configuration.

In an embodiment, after receiving the paging message, the terminal may determine whether the terminal is configured with the available multicast service configuration.

If the terminal is not configured with the available multicast service configuration, and the multicast service configuration is carried by the dedicated signaling, instead of ignoring the paging message, the terminal may trigger the establishment of the RRC connection based on the paging message, enter the connected state, receive the dedicated signaling in the connected state, and obtain the multicast service configuration from the dedicated signaling so as to ensure that the multicast service may be successfully received based on the obtained multicast service configuration.

If the terminal is configured with the available multicast service configuration, and the multicast service configuration is carried by the MCCH, the terminal may ignore the paging message so that it does not have to trigger the establishment of the RRC connection based on the paging message, continue to remain to receive the MCCH message in the non-connected state, and can obtain the multicast service configuration from the MCCH message so that it can receive the multicast service configuration based on the obtained multicast service configuration.

FIG. 9 is a schematic diagram of an interaction between a terminal and a network device according to an embodiment of the present disclosure.

As shown in FIG. 9, the network device may send a paging message, and the terminal may receive the paging message, which includes MBS information. After receiving the paging message, the terminal may perform a first operation, which includes at least one of: receiving an MCCH message; triggering an establishment of an RRC connection; or ignoring the paging message.

In an embodiment, the terminal obtains the MCCH message when a first condition is satisfied, in which the first condition includes at least one of: the terminal is not configured with an available multicast service configuration; the terminal is not configured with available MCCH configuration information; or receiving first indication information sent by a network device, in which the first indication information indicates the terminal to receive the MCCH message.

In an embodiment, the terminal may trigger the establishment of the RRC connection when a second condition is satisfied, in which the second condition includes at least one of: the terminal is not configured with an available multicast service configuration; the terminal is not configured with available MCCH configuration information; or receiving second indication information sent by a network device, in which the second indication information indicates the terminal to establish the RRC connection.

In an embodiment, the terminal may ignore the paging message when a third condition is satisfied, in which the third condition includes one of: the terminal is configured with an available multicast service configuration; or the terminal is not configured with available multicast service configuration, in which the multicast service configuration is carried by the MCCH.

It needs to be noted that for other contents involved in this embodiment reference may be made to descriptions of relevant contents in previous embodiments, which will not be repeated here.

Corresponding to the above embodiments of the method for performing an operation and the method for indicating an operation, the present disclosure also provides embodiments of an apparatus for performing an operation and an apparatus for indicating an operation.

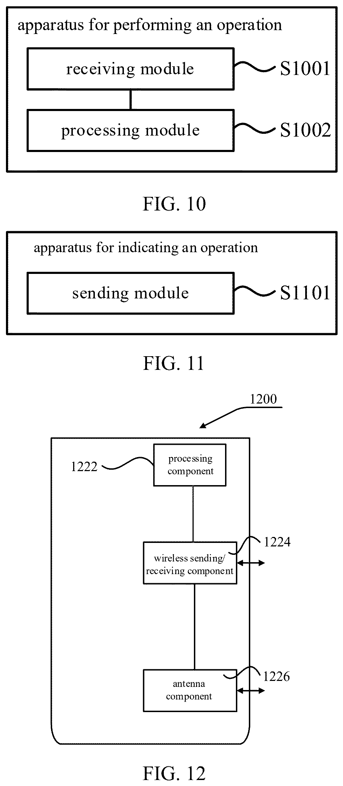

FIG. 10 is a schematic block diagram of an apparatus for performing an operation according to the embodiments of the present disclosure. As shown in FIG. 10, the apparatus for performing an operation includes:
a receiving module 1001, configured to receive a paging message, in which the paging message includes MBS information; and
a processing module 1002, configured to perform a first operation, in which the first operation includes at least one of: receiving an MCCH message; triggering an establishment of an RRC connection; or ignoring the paging message.

**In** an embodiment, receiving the MCCH message includes: obtaining the MCCH message when a first condition is satisfied, in which the first condition includes at least one of: the terminal is not configured with an available multicast service configuration; the terminal is configured with available MCCH configuration information; or receiving first indication information sent by a network device, in which the first indication information indicates the terminal to receive the MCCH message.

**In** an embodiment, the multicast service configuration is carried in an MCCH.

**In** an embodiment, receiving the MCCH message includes: obtaining the MCCH message in a next MCCH repetition period.

**In** an embodiment, the receiving module is configured to receive an MCCH change notification; and the processing module is configured to perform an operation according to the MCCH change notification.

**In** an embodiment, performing the operation according to the MCCH change notification includes: obtaining the MCCH message starting from a time-domain unit receiving the MCCH change notification.

In an embodiment, triggering the establishment of the RRC connection includes: triggering the establishment of the RRC connection when a second condition is satisfied, in which the second condition includes at least one of: the terminal is not configured with an available multicast service configuration; the terminal is not configured with available MCCH configuration information; or receiving second indication information sent by a network device, in which the second indication information indicates the terminal to establish the RRC connection.

In an embodiment, the multicast service configuration is carried in a dedicated signaling.

In an embodiment, the apparatus is set in the terminal, and the terminal is a terminal that supports receiving a multicast service in a non-connected state.

FIG. 11 is a schematic block diagram of an apparatus for indicating an operation according to an embodiment of the present disclosure. As shown in FIG. 11, the apparatus for indicating an operation includes:

a sending module 1101, configured to send a paging message to a terminal when the terminal has joined a multicast service session and is in a non-connected state, in which the paging message includes MBS information; and send indication information to the terminal, in which the indication information indicates the terminal to perform a first operation after receiving the paging message, in which the first operation includes at least one of:
receiving an MCCH message;
triggering an establishment of an RRC connection; or
ignoring the paging message.

In an embodiment, receiving the MCCH message includes: obtaining the MCCH message when a first condition is satisfied, in which the first condition includes at least one of: the terminal is not configured with an available multicast service configuration; the terminal is not configured with available MCCH configuration information; or receiving first indication information sent by a network device, in which the first indication information indicates the terminal to receive the MCCH message.

**In** an embodiment, the multicast service configuration is carried in an MCCH.

In an embodiment, receiving the MCCH message includes: obtaining the MCCH message in a next MCCH repetition period.

**In** an embodiment, triggering the establishment of the RRC connection includes: triggering the establishment of the RRC connection when a second condition is satisfied, in which the second condition includes at least one of: the terminal is not configured with an available multicast service configuration; the terminal is not configured with available MCCH configuration information; or receiving second indication information sent by a network device, in which the second indication information indicates the terminal to establish the RRC connection.

For apparatus embodiments, since the apparatus embodiments basically correspond to method embodiments, for relevant points reference may be made to the description of the method embodiments. The apparatus embodiments described above are merely illustrative. The units illustrated as separate components may be or not be separated physically, and components described as units may be or not be physical units, i.e., may be located at one place, or may be distributed onto multiple network units. It is possible to select some or all of the units according to actual needs, for realizing the objective of embodiments of the present disclosure. Those skilled in the art may understand and implement without any creative effort.

The embodiments of the present disclosure also provide a system for performing an operation, including a terminal and a network device, in which the terminal is configured to implement the method for performing an operation of any one of the above embodiments, and the network device is configured to implement the method for indicating an operation of any one of the above embodiments.

The embodiments of the present disclosure also provide a communication device, including: a processor; and a memory for storing a computer program, in which when the computer program is executed by the processor, the method for performing an operation of any one of the above embodiments is implemented.

The embodiments of the present disclosure also provide a communication device, including: a processor; and a memory for storing a computer program, in which when the computer program is executed by the processor, the method for indicating an operation of any one of the above embodiments is implemented.

The embodiments of the present disclosure also provide a computer-readable storage medium for storing a computer program, in which when the computer program is executed by a processor, the method for performing an operation of any one of the above embodiments is implemented.

The embodiments of the present disclosure also provide a computer-readable storage medium for storing a computer program, in which when the computer program is executed by a processor, the method for indicating an operation of any one of the above embodiments is implemented.

As shown in FIG. 12, which is a schematic block diagram of an apparatus 1200 for indicating an operation according to the embodiments of the present disclosure. The apparatus 1200 may be a base station. Referring to FIG. 12, the apparatus 1200 includes a processing component 1222, a wireless sending/receiving component 1224, an antenna component 1226, and a signal processing part specific to a wireless interface. The processing component 1222 may further include one or more processors. One of the processors in the processing component 1222 may be configured to implement the method for indicating an operation in any one of the above embodiments.

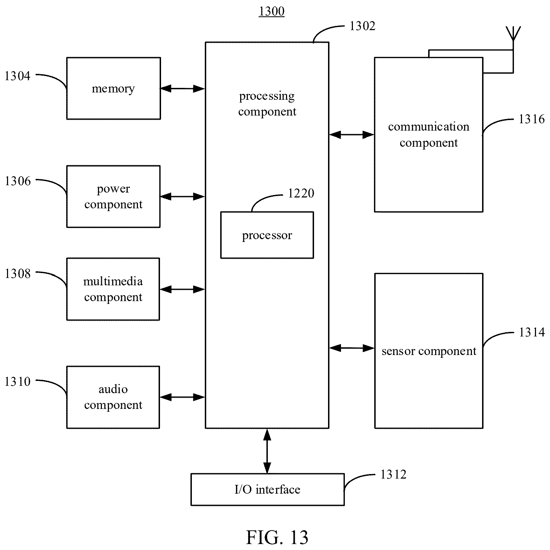

FIG. 13 is a schematic block diagram of an apparatus 1300 for performing an operation according to the embodiments of the present disclosure. For example, the apparatus 1300 may be a terminal, such as a mobile phone, a computer, a digital broadcasting terminal, a message sending and receiving equipment, a game controller, a tablet device, a medical device, a fitness equipment, a personal digital assistant and so on.

Referring to FIG. 13, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For example, the processing component 1302 may include a multimedia module to facilitate the interaction between the multimedia component 1308 and the processing component 1302.

The memory 1304 is configured to store various types of data to support the operation of the apparatus 1300. Examples of such data include instructions for any applications or methods operated on the apparatus 1300, contact data, phonebook data, messages, pictures, video, etc.

The power component 1306 provides power to various components of the apparatus 1300. The power component 1306 may include a power management system, one or more power sources, and any other components associated with the generation, management, and distribution of power in the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signals from the user.

The audio component 1310 is configured to output and/or input audio signals. For example, the audio component 1310 includes a microphone (MIC) configured to receive an external audio signal when the apparatus 1300 is in an operation mode, such as a call mode, a recording mode, and a voice recognition mode. The received audio signal may be further stored in the memory 1304 or sent via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and so on. The buttons may include, but be not limited to, a home button, a volume button, a starting button, and a locking button.

The sensor component 1314 includes one or more sensors to provide status assessments of various aspects of the apparatus 1300.

The communication component 1316 is configured to facilitate communication, wired or wirelessly, between the apparatus 1300 and other devices. The apparatus 1300 may access a wireless network based on a communication standard, such as Wi-Fi, 2G, 3G and 4G LTE, 5G NR or a combination thereof. In an exemplary embodiment, the communication component 1316 receives a broadcast signal or broadcast associated information from an external broadcast management system via a broadcast channel. In an exemplary embodiment, the communication component 1316 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more exemplary embodiments, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method for performing an operation in any one of the above embodiments.

In one or more exemplary embodiments, there is also provided a non-transitory computer readable storage medium including instructions, such as included in the memory 1304, executable by the processor 1320 in the apparatus 1300, for performing the method for performing an operation in any one of the above embodiments. For example, the non-transitory computer-readable storage medium may be a ROM, a RAM, a CD-ROM, a magnetic tape, a floppy disc, an optical data storage device, and so on.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exaction construction that has been described above and illustrated in the accompanying drawings, and that various modifications and changes may be made without departing from the scope thereof. It is intended that the scope of the present disclosure only be limited by the appended claims.

## Claims

1. A method for performing an operation, performed by a terminal, comprising:
receiving a paging message, wherein the paging message comprises multicast broadcast service (MBS) information; and
performing a first operation, wherein the first operation comprises at least one of:
receiving a MBS control channel (MCCH) message;
triggering an establishment of a radio resource control (RRC) connection; or
ignoring the paging message.

2. The method of claim 1, wherein receiving the MCCH message comprises:
obtaining the MCCH message when a first condition is satisfied, wherein the first condition comprises at least one of:
the terminal is not configured with an available multicast service configuration;
the terminal is configured with available MCCH configuration information; or
receiving first indication information sent by a network device, wherein the first indication information indicates the terminal to receive the MCCH message.

3. The method of claim 2, wherein the multicast service configuration is carried in an MCCH.

4. The method of any one of claims 1 to 3, wherein receiving the MCCH message comprises:
obtaining the MCCH message in a next MCCH repetition period.

5. The method of any one of claims 1 to 4, further comprising:
receiving an MCCH change notification; and
performing an operation according to the MCCH change notification.

6. The method of claim 5, wherein performing the operation according to the MCCH change notification comprises:
obtaining the MCCH message starting from a time-domain unit receiving the MCCH change notification.

7. The method of claim 1, wherein triggering the establishment of the RRC connection comprises:
triggering the establishment of the RRC connection when a second condition is satisfied, wherein the second condition comprises at least one of:
the terminal not configured with an available multicast service configuration;
the terminal not configured with available MCCH configuration information; or
receiving second indication information sent by a network device, wherein the second indication information indicates the terminal to establish the RRC connection.

8. The method of claim 7, wherein the multicast service configuration is carried in a dedicated signaling.

9. The method of any one of claims 1 to 8, wherein the terminal is a terminal supporting multicast service reception in a non-connected state.

10. A method for indicating an operation, performed by a network device, comprising:
sending a paging message to a terminal when the terminal has joined a multicast service session and is in a non-connected state, wherein the paging message comprises multicast broadcast service (MBS) information; and
sending indication information to the terminal, wherein the indication information indicates the terminal to perform a first operation after receiving the paging message, wherein the first operation comprises at least one of:
receiving a MBS control channel (MCCH) message;
triggering an establishment of a radio resource control (RRC) connection; or
ignoring the paging message.

11. The method of claim 10, wherein receiving the MCCH message comprises:
obtaining the MCCH message when a first condition is satisfied, wherein the first condition comprises at least one of:
the terminal is not configured with an available multicast service configuration;
the terminal is configured with available MCCH configuration information; or
receiving first indication information sent by a network device, wherein the first indication information indicates the terminal to receive the MCCH message.

12. The method of claim 11, wherein the multicast service configuration is carried in an MCCH.

13. The method of any one of claims 10 to 12, wherein receiving the MCCH message comprises:
obtaining the MCCH message starting from a time-domain unit receiving an MCCH change notification.

14. The method of claim 10, wherein triggering the establishment of the RRC connection comprises:
triggering the establishment of the RRC connection when a second condition is satisfied, wherein the second condition comprises at least one of:
the terminal not configured with available multicast service configuration;
the terminal not configured with available MCCH configuration information; or
receiving second indication information sent by the network device, wherein the second indication information indicates the terminal to establish the RRC connection.

15. An apparatus for performing an operation, comprising:
a receiving module, configured to receive a paging message, wherein the paging message comprises multicast broadcast service (MBS) information; and
a processing module, configured to perform a first operation, wherein the first operation comprises at least one of:
receiving a MBS control channel (MCCH) message;
triggering an establishment of a radio resource control (RRC) connection; or
ignoring the paging message.

16. An apparatus for performing an operation, comprising:
a sending module, configured to send a paging message to a terminal when the terminal has joined a multicast service session and is in a non-connected state, wherein the paging message comprises multicast broadcast service (MBS) information; and send indication information to the terminal, wherein the indication information indicates the terminal to perform a first operation after receiving the paging message, wherein the first operation comprises at least one of:
receiving a MBS control channel (MCCH) message;
triggering an establishment of a radio resource control (RRC) connection; or
ignoring the paging message.

17. A system for performing an operation, comprising a terminal and a network device, wherein the terminal is configured to implement the method for performing an operation of any one of claims 1 to 9, and the network device is configured to implement the method for indicating an operation of any one of claims 10 to 16.

18. A communication device, comprising:
a processor; and
a memory for storing a computer program,
wherein when the computer program is executed by the processor, the method for performing an operation of any one of claims 1 to 9 is implemented.

19. A communication device, comprising:
a processor; and
a memory for storing a computer program,
wherein when the computer program is executed by the processor, the method for performing an operation of any one of claims 10 to 15 is implemented.

20. A computer-readable storage medium for storing a computer program, wherein when the computer program is executed by a processor, the method for performing an operation of any one of claims 1 to 9 is implemented.

21. A computer-readable storage medium for storing a computer program, wherein when the computer program is executed by a processor, the method for performing an operation of any one of claims 10 to 15 is implemented.
